# EUROPÄISCHE PATENTSCHRIFT

(11) **EP 3 034 725 B1**
(45) Veröffentlichungstag und Bekanntmachung des Hinweises auf die Patenterteilung: **21.03.2018**
(21) Anmeldenummer: 15200212.7
(22) Anmeldetag: 15.12.2015
(51) Int. Cl.: E05B 85/12, B60R 13/02, E05B 79/20

(54) **HANDAUFLAGE FÜR EINE TÜRVERKLEIDUNG**
HAND SUPPORT FOR A DOOR PANEL
REPOSE-MAIN D'HABILLAGE DE PORTIÈRE

(30) Priorität: 16.12.2014 DE 102014118782
(43) Veröffentlichungstag der Anmeldung: 22.06.2016
(73) Patentinhaber: Lisa Dräxlmaier GmbH, 84137 Vilsbiburg (DE)
(72) Erfinder: Windl, Michael, 84028 Landshut (DE); Feineis, Martin, 84028 Landshut (DE); Herb, Andreas, 82131 Gauting (DE); Schmittat, Lutz, 84137 Vilsbiburg (DE)

(56) Entgegenhaltungen:
- EP-A2- 1 942 242
- DE-B- 1 081 323
- DE-U- 1 895 007
- FR-E- 67 612
- GB-A- 2 510 983
- US-A- 3 208 784
- US-A1- 2006 145 513

## Beschreibung

### Technisches Gebiet

Die vorliegende Erfindung betrifft eine Handauflage für eine Türverkleidung eines Fahrzeuges, insbesondere eines Kraftfahrzeuges.

### Stand der Technik

Fahrzeugtüren, beispielsweise von Automobilen, weisen in der Regel im Innenraum einen Türöffnungshebel und einen davon getrennten Türgriff auf. Der Türöffnungshebel ist mit dem Türschloss verbunden und kann durch Ziehen bei geschlossener Tür das Türschloss entriegeln, so dass die Tür geöffnet werden kann. Der Türgriff dient im Wesentlichen dazu, dass der Fahrzeuginsasse die Fahrzeugtür öffnen und schließen kann, also die Schwenkbewegung der Fahrzeugtür durchführen kann. Hierzu ist der Türgriff meist so ausgestaltet, dass der Fahrzeuginsasse diesen mit seiner Hand umfassen kann.

Um Fehlbetätigungen bzw. versehentliches Betätigen des Türschlosses zu vermeiden, wird der Türöffnungshebel meist im Abstand zum Türgriff angeordnet. Bei einem handelsüblichen Aufbau einer Türinnenverkleidung ist hierbei der Türöffnungshebel im nur geringen Abstand zum Türscharnier positioniert und der Türgriff ist in Fahrtrichtung hinter dem Türöffnungshebel angeordnet. Diese Anordnung hat jedoch den Nachteil, dass der Fahrzeuginsasse, insbesondere beim Aussteigen, zuerst den Türöffnungshebel betätigen und anschließend zum Türgriff umgreifen muss, damit die Tür sicher geöffnet werden kann. Weiterhin sind die meisten Türschlösser bei Fahrzeugen hierbei so gestaltet, dass bei Betätigung des Türöffnungshebels die Tür zwar geöffnet wird, aber sich die Tür nicht vollständig aus dem Schloss löst. Dies soll vermeiden, dass sich die Tür eigenständig öffnet. Dies kann bspw. bei einer Schräglage des Fahrzeuges der Fall sein. Um die Tür aus dem Schloss zu bewegen, muss daher häufig bei betätigtem Türöffnungshebel die Tür leicht nach außen gedrückt werden.

Da der Fahrzeuginsasse jedoch seine Hand in diesem Moment am Türöffnungshebel platziert hat, muss er entweder umständlich mit der zweiten Hand den Türgriff festhalten oder alternativ mit dem Ellenbogen die Tür aufdrücken. Insbesondere beim Aufdrücken der Tür mit dem Ellenbogen hat der Fahrzeuginsasse nur wenig Kontrolle über die Tür.

In der EP 1 942 242 A2 wird ein Türgriff für die Innenseite einer Fahrzeugtür offenbart, der drehbar an einer Armauflage befestigt ist. Durch das Verdrehen des Türgriffs kann entweder die Auflagefläche der Armauflage verlängert werden oder der Türgriff in eine Position gedreht werden, in der der Türgriff zum Öffnen und Schließen der Tür genutzt werden kann. Im Drehmechanismus des Türgriffs ist des Weiteren eine Klinke zum Entriegeln der Fahrzeugtür angeordnet. US 3208784 A beschreibt eine Handauflage für die Innenseite einer Fahrzeugtür gemäß dem Oberbegriff des Anspruchs 1.

Die im Stand der Technik bekannte Anordnung schützt daher zwar sicher gegen Fehlbetätigungen bzw. versehentliche Betätigungen des Türöffnungshebels, doch weist diese Anordnung insbesondere beim Türöffnen den Nachteil auf, dass unmittelbar nach Betätigung des Türöffnungshebels der Fahrzeuginsasse eine nur sehr eingeschränkte Kontrolle über die Tür hat.

### Beschreibung der Erfindung

Es ist daher eine Aufgabe der vorliegenden Erfindung, eine Anordnung bereitzustellen, die die oben genannten Nachteile zumindest teilweise überwindet und ein Türöffnen ermöglicht, bei dem der Fahrgast mehr Kontrolle über die Tür hat.

Die erfindungsgemäße Aufgabe wird durch eine Handauflage mit den Merkmalen des Anspruchs 1 gelöst. Weitere vorteilhafte Ausgestaltungen sind in den Unteransprüchen, in der Beschreibung sowie in den Zeichnungen offenbart.

Eine erfindungsgemäße Handauflage für eine Türverkleidung eines Fahrzeuges, insbesondere für eine Kraftfahrzeugtür, umfasst ein Auflageelement, eine Eingriffsrinne und ein Entriegelungselement zum Entriegeln eines Türschlosses. Das Auflageelement dient im Wesentlichen der Auf- oder Ablage der Hand oder des Armes eines im Fahrzeug befindlichen Fahrzeuginsassen. Das Auflageelement weist eine Schmal- und eine Längsseite auf. Die Schmalseite des Auflageelements verläuft in einem Winkel zwischen 40 und 100 Grad, bevorzugt 45 bis 90 Grad, zu einer Hauptebene der Türverkleidung. Die Längsseite verläuft hingegen in einem Winkel von 0 bis 30 Grad, bevorzugter 0 bis 20 Grad, besonders bevorzugt 0 bis 15 Grad, zur Hauptebene der Türverkleidung. Unter Hauptebene kann in diesem Zusammenhang diejenige Ebene verstanden werden, die im Wesentlichen parallel zum Türblatt verläuft. Durch diese Anordnung von Schmal- und Längsseite steht das Auflageelement also von der Türverkleidung ab, wobei die Fläche selbst bevorzugt im Wesentlichen senkrecht zur Gravitationsrichtung der Erde verläuft. Die Türverkleidung ist bevorzugt im Innenraum des Fahrzeuges angeordnet.

Die Eingriffrinne grenzt vorzugsweise unmittelbar an die Schmal- und/oder Längsseite des Auflageelements an. Unter Eingriffrinne ist in diesem Zusammenhang eine längliche Vertiefung zu verstehen, die im Schnitt einen Grund und zwei sich gegenüberliegende Begrenzungsflächen sowie eine offene Seite aufweist, die dem Grund gegenüber liegt. Bevorzugt ist die Eingriffsrinne zwischen Auflageelement und Türverkleidung angeordnet, so dass zwischen Auflageelement und Türverkleidung eine Vertiefung ausgebildet wird. Das Entriegelungselement zum Entriegeln eines Türschlosses ist an dem Auflageelement angrenzend angeordnet und erstreckt sich zumindest teilweise in die Eingriffrinne hinein. Das Entriegelungselement steht also bevorzugt von dem Auflageelement zumindest teilweise ab und ragt in die von der Eingriffrinne ausgebildete Vertiefung zumindest teilweise hinein. Das Entriegelungselement kann hierzu direkt in einem Bereich angeordnet sein, in dem Auflageelement und Eingriffrinne aneinander angrenzen.

Durch den erfindungsgemäßen Aufbau wird die Funktionalität eines Türgriffes sowie die Funktionalität eines Türöffnungshebels in einer Handauflage vereint. Die Anordnung der Eingriffrinne zwischen Auflageelement und Türverkleidung schafft somit einen Eingriff, der mit einem Türgriff vergleichbar ist. Ein Passagier kann also beispielsweise bei geöffneter Tür die Handauflage umfassen und somit die Tür an sich heranziehen. Gleichzeitig kann die Tür im geschlossenen Zustand entriegelt werden, indem vom Fahrzeuginsassen das Entriegelungselement betätigt wird. Ferner kann die Handauflage vom Fahrzeuginsassen nach wie vor als Ablage der Hand oder des Armes bspw. während der Fahrt genutzt werden.

Da das Entriegelungselement nicht direkt auf dem Auflageelement angeordnet ist, sondern lediglich an das Auflageelement angrenzt und sich in die Eingriffrinne erstreckt, kann das Risiko einer Fehlbetätigung bspw. während der Fahrt des Fahrzeuges auf ein Minimum reduziert werden. Darüber hinaus kann durch den beschriebenen Aufbau auch bei der Entriegelung des Türschlosses die vollständige Kontrolle über die Tür beibehalten werden. Entriegelt der Fahrzeuginsasse über das Entriegelungselement die Tür, befindet sich seine Hand weiterhin in der Eingriffrinne. Somit hat der Fahrzeuginsasse die Tür während des gesamten Öffnungsvorgangs fest im Griff und kann die Tür beim Öffnen, sofern dies erforderlich ist, sofort wieder an sich heranziehen. Ferner kann der Fahrzeuginsasse die Tür durch Drücken mit der Hand, mit der die Entriegelungstaste betätigt wurde, öffnen. Ein zusätzliches Drücken, beispielsweise mit dem Ellenbogen gegen die Türverkleidung zum Öffnen der Tür, ist nicht mehr erforderlich.

Um einen sicheren Griff beim Öffnen und Schließen der Fahrzeugtür zu gewährleisten, kann die Eingriffrinne eine Tiefenrichtung aufweisen, die zur Hauptebene der Türverkleidung verläuft. In diesem Zusammenhang kann unter der Tiefenrichtung die Richtung verstanden werden, die im Wesentlichen parallel zur Erdgravitation verläuft. Es hat sich gezeigt, dass diese Anordnung besonders vorteilhaft zum Greifen der Handauflage beim Öffnen und Schließen der Tür geeignet ist, da der Fahrzeuginsasse in dieser Ausgestaltung die Handauflage regelrecht mit seiner Hand umfassen kann.

Die Ergonomie der Handauflage kann zusätzlich gesteigert werden, indem sich auch das Auflageelement zumindest teilweise in die Eingriffsrinne hinein erstreckt, so dass das Auflageelement über der Eingriffrinne einen Vorsprung ausbildet. In diesem Fall kann der Fahrzeuginsasse entweder beim Betätigen des Entriegelungselements oder beim einfachen Eingreifen in die Eingriffrinne, die Handauflage noch effektiver umfassen, so dass ausgeschlossen werden kann, dass die Tür dem Fahrzeuginsassen beispielsweise durch einen Windstoß aus der Hand gerissen wird.

In diesem Zusammenhang ist es besonders vorteilhaft, wenn das Entriegelungselement in zumindest einer Position von dem Vorsprung verdeckt wird. In dieser Position befindet sich das Entriegelungselement also zumindest teilweise unterhalb des Vorsprungs. Bevorzugt nimmt das Entriegelungselement diese Position ein, wenn es vom Fahrzeuginsassen betätigt wird. Dies hat den Vorteil, dass das Entriegelungselement den Fahrzeuginsassen beim Öffnen der Tür nicht behindert. Weiterhin kann so der Fahrzeuginsasse auch beim Betätigen des Entriegelungselements die Handauflage sicher hintergreifen, so dass kein Abrutschen zu befürchten ist.

Bevorzugt weist das Entriegelungselement in diesem Zusammenhang zumindest eine Betätigungsfläche auf, die in zumindest einer Position parallel zu einer Seite des Vorsprungs angeordnet ist, die der Eingriffrinne und insbesondere dem Grund der Eingriffrinne zugewandt ist. Hierbei ist es besonders vorteilhaft, wenn es sich bei dieser Position um die Position handelt, in der das Entriegelungselement von dem Auflageelement verdeckt wird. Unter Betätigungsfläche kann in diesem Zusammenhang die Fläche verstanden werden, die vom Fahrzeuginsassen berührt oder gegriffen werden muss, um die Betätigung des Entriegelungselements durchzuführen.

Naturgemäß weist die Tür im geöffneten Zustand einen anderen Winkel zum Fahrzeuginsassen auf, als im geschlossenen Zustand. Entsprechend ändert sich auch der ideale Eingriffsbereich für den Fahrzeuginsassen, um die Tür entweder zu öffnen, also von sich weg zu drücken, oder zu schließen, also an sich heran zu ziehen. In diesem Zusammenhang ist es daher vorteilhaft, wenn sich die Eingriffrinne sowohl über die Schmalseite als auch über die Längsseite des Auflageelements erstreckt. So wird ein stufenloser Eingriffbereich geschaffen, der aus verschiedenen Positionen der Tür bzw. des Fahrzeuginsassen zur Tür genutzt werden kann. Gleichsam kann somit das Risiko von Fehlbetätigungen des Entriegelungselements zusätzlich minimiert werden, da so Bereiche erzeugt werden können in der Eingriffrinne, in denen kein Verriegelungselement angeordnet ist.

Um das Fehlbetätigungsrisiko zusätzlich zu senken, kann das Entriegelungselement an der Schmalseite des Auflageelements angeordnet sein. Insbesondere dann, wenn sich die Eingriffrinne sowohl über die Längs- als auch über die Schmalseite des Auflageelements erstreckt, hat dies den Vorteil, dass die Eingriffrinne im Bereich der Längsseite gezielt zum Heranziehen der Tür im geöffneten Zustand genutzt werden kann und der Eingriffrinne im Bereich der Schmalseite lediglich die Aufgabe zukommt, ein sicheres Umgreifen des Entriegelungselements zu ermöglichen, so dass die Kontrolle während der Entriegelung über die Tür durch den Fahrzeuginsassen bestehen bleibt.

Je nach Art der Anordnung der Handauflage bzw. nach Art und Form der Türverkleidung, an der die Handauflage angeordnet ist, können Bereiche der Handauflage mit unterschiedlicher Intensität zum Öffnen und Schließen der Tür genutzt werden. Um hier die Ergonomie der Handauflage zu begünstigen, kann die Eingriffrinne zumindest abschnittsweise eine Tiefe in Tiefenrichtung aufweisen, die entlang der Längsausdehnung der Eingriffrinne variiert. So können beispielsweise Bereiche, die vom Fahrzeuginsassen verstärkt zum Türöffnen und - schließen genutzt werden, größere Tiefen aufweisen als andere Bereiche. Unter Längsausdehnung kann in diesem Zusammenhang die Ausdehnungsrichtung verstanden werden, die von allen Ausdehnungsrichtungen der Eingriffrinne den größten Wert aufweist. Hierbei sei angemerkt, dass aus designästhetischen Gründen diese Ausdehnung nicht zwangsläufig linear verlaufen muss, sondern beispielsweise auch Krümmungen beinhalten kann.

Als Entriegelungselement können verschiedene Vorrichtungen vorgesehen sein, wie zum Beispiel ein Taster, der lediglich einen elektronischen Impuls durch Betätigen erzeugt. Dieser Impuls kann an eine Steuereinheit übermittelt werden, die das Türschloss öffnet. Es sind jedoch auch mechanische oder andere vergleichbare Entriegelungsmechanismen anwendbar.

Sofern ein mechanischer Entriegelungsmechanismus Anwendung findet, kann bspw. zwischen Auflageelement und Eingriffrinne eine Öffnung ausgebildet sein, durch die das Entriegelungselement zumindest anteilig geführt ist. Die Öffnung weist dabei eine Form auf, die zumindest teilweise der Kontur des Entriegelungselements entspricht, um zu vermeiden, dass zu große Zwischenräume zwischen Entriegelungselement und Öffnung entstehen. Eine derartige Anordnung ermöglicht beispielsweise die Verbindung des Entriegelungselements mit einem Bowdenzug. Der Bowdenzug kann direkt oder indirekt mit dem Türschloss in Verbindung stehen.

Das Entriegelungselement kann auf einer Drehachse gelagert sein. Entsprechend lässt sich natürlich das Entriegelungselement in diesem Fall um diese Drehachse verschwenken. Die Drehachse ist vorzugsweise außerhalb eines Sichtbereiches des Fahrzeuginsassen angeordnet. Beispielsweise kann dies realisiert sein, indem die Drehachse auf einer dem Fahrzeuginsassen abgewandten Seite der Handauflage oder der Türverkleidung angeordnet ist.

Insbesondere wenn das Entriegelungselement auf der Schmalseite des Auflageelements angeordnet ist, kann eine Betätigung in einer Bewegungsrichtung erfolgen, die parallel zu einer Hauptbewegungsrichtung des Fahrzeuges oder entgegen einer Hauptbewegungsrichtung des Fahrzeuges verläuft. Die Betätigung in diese Bewegungsrichtung kann das Risiko einer Fehlbetätigung zusätzlich senken, da der Fahrzeuginsasse zum Öffnen der Tür das Entriegelungselement ziehen oder drücken muss. Ein versehentliches Betätigen beispielsweise durch Auflegen der Hand auf die Handauflage kann auf diese Weise vermieden werden.

Es sei hierbei jedoch angemerkt, dass eine solche Betätigung in oder entgegen der Hauptbewegungsrichtung des Fahrzeuges nicht zwangsläufig mechanisch über Bowdenzug erfolgen muss. Es ist ebenso möglich, dass eine entsprechende Tasteranordnung oder ein vergleichbarer Entriegelungsmechanismus, der geeignet ist, um das Türschloss zu entriegeln, Anwendung findet.

Das Auflageelement kann eine Wölbung aufweisen. Die Wölbung ist bevorzugt an eine menschliche Hand angepasst, so dass die Auflage der Hand auf dem Auflageelement vordefiniert wird. Durch diese gezielte ergonomische Wölbung kann zusätzlich vermieden werden, dass ein unachtsames Ablegen der Hand auf dem Auflageelement dazu führt, dass die Hand zu nah an das Entriegelungselement abgelegt wird und ein Fehlbetätigungsrisiko des Entriegelungselements erhöht. Vielmehr wird eine Idealposition geschaffen, die gleichsam sicherstellt, dass im normalen Fahrbetrieb bei Nutzung der Auflageelement die Hand weit genug vom Entriegelungselement entfernt ist.

Weiterhin kann das Auflageelement Bereiche unterschiedlicher Breite aufweisen, wobei die Breiten vorzugsweise senkrecht zu der Hauptebene der Türverkleidung bzw. zur Längsrichtung des Auflageelements verlaufen können. So kann beispielsweise das Auflageelement im Bereich des Entriegelungselements eine vergleichsweise große Breite aufweisen, um ein sicheres Umgreifen und sicheres Betätigen der Handauflage bzw. des Entriegelungselements sicherzustellen. Hingegen können Bereiche des Auflageelements, die einen gewissen Abstand zum Betätigungselement aufweisen, deutlich schmaler ausgestattet sein. Diese Bereiche können beispielsweise speziell für das Schließen der Tür optimiert sein. Beim Schließen muss der Fahrzeuginsasse die Handauflage möglichst gut umgreifen können, da er hauptsächlich Zugbelastungen in der Eingriffrinne aufbringen muss. Durch eine schmale Breite des Auflageelements kann der Fahrzeuginsasse also vor allem bei geöffneter Tür besser und schneller die Handauflage mit der Hand umschließen und die Tür sicher an sich heranziehen.

Das Entriegelungselement kann in einer ersten Position an eine dem Ablageelement gegenüberliegende Begrenzungsfläche der Eingriffrinne zumindest teilweise anliegen. Weiterhin kann das Entriegelungselement in einer zweiten Position parallel zur Schmal- oder Längsseite des Ablageelements angeordnet sein. Es ist hierbei von Vorteil, wenn die zweite Position einer Position, in die das Entriegelungselement gebracht werden muss, um das Türschloss zu entriegeln, also einer Entriegelungsposition, entspricht. Die erste Position entspricht bevorzugt der Position, in der sich das Entriegelungselement befindet, wenn keine Betätigung bspw. durch einen Fahrzeuginsassen vorliegt und somit also einer Betätigungsposition entspricht.

Die Bewegung des Entriegelungselements zwischen erster und zweiter Position kann bspw. erfolgen, in dem das Entriegelungselement um eine Drehachse bewegbar ist, die insbesondere parallel zur Tiefenrichtung der Eingriffrinne verlaufen kann. Durch eine derartige Anordnung kann das Risiko einer versehentlichen Betätigung des Entriegelungselements zusätzlich gesenkt werden.

Um die Ergonomie des Entriegelungselements zusätzlich zu erhöhen und um gleichzeitig das Risiko von Fehlbetätigungen weiter zu senken, kann das Entriegelungselement mit einem Hebelelement in Verbindung stehen, an dem zu einer Türschlossentriegelung ein biegeschlaffes Verbindungselement, insbesondere ein Bowdenzug, angeordnet ist. Das Entriegelungselement kann in diesem Zusammenhang derart mit dem Hebelelement zusammenwirken, dass die Bewegung des Entriegelungselements auf das Hebelelement übertragen wird und somit das biegeschlaffe Verbindungselement zum Türschlossentriegeln gespannt wird. Über das Hebelelement kann hierbei definiert werden, mit welcher Kraft das Entriegelungselement betätigt und/oder um welchen Bewegungsweg das Entriegelungselement bewegt werden muss, um eine Türschlossentriegelung auszulösen. Das Hebelelement kann bspw. über ein Zahnrad mit dem Entriegelungselement verbunden sein.

Das Hebelelement kann um eine Hebelachse rotierbar angeordnet und das biegeschlaffe Verbindungselement kann auf dem Hebelelement aufwickelbar sein. Die Aufwicklung des Verbindungselements erfolgt in diesem Zusammenhang bevorzugt durch die Rotation des Hebelelements um die Hebelachse. Es ist von besonderem Vorteil, wenn bei einer solchen Anordnung auch das Entriegelungselement um eine Drehachse verschwenkbar ist, die parallel zur Hebelachse angeordnet ist, da auf diese Weise eine einfache Bewegungs- und Kraftübertragung zwischen Entriegelungselement und Hebelelement gegeben ist.

Weiterhin kann das Hebelelemnt eine "L"-, "C"- oder Schneckenform aufweisen. Da sich das biegeschlaffe Verbindungselement durch die Drehung des Hebelelements auf dem Hebelelement aufwickelt, wird auf diese Weise das Drehmoment, mit dem das Hebelelement das biegeschlaffe Verbindungselement zur Türschlossentriegelung spannt, in Abhängigkeit von dem zurückgelegten Bewegungsweg erhöht. Somit kann über die Form des Hebelelements die zur Türschlossentriegelung notwendige Kraft in Abhängigkeit zu einer Bewegungsposition des Entriegelungselements definiert werden.

### Kurze Figurenbeschreibung

Weitere Details und Vorteile von Ausführungsformen der Erfindung werden im Folgenden mit Bezug auf die Figuren erläutert. Die dort und oben beschriebenen Merkmale können alleinstehend oder in Kombination umgesetzt werden, insofern sich die Merkmale nicht widersprechen. Die folgende Beschreibung der bevorzugten Ausführungsform erfolgt dabei unter Bezugnahme auf die begleitenden Zeichnungen. Dabei zeigen:
- Figur 1: eine Darstellung einer ersten Ausführungsform einer erfindungsgemäßen Handauflage in einer Draufsicht,
- Figur 2: eine Darstellung der ersten Ausführungsform in einer Seitenansicht,
- Figur 3: eine Darstellung der ersten Ausführungsform in einer dreidimensionalen Ansicht,
- Figur 4: eine Darstellung der ersten Ausführungsform in einer weiteren Seitenansicht und
- Figur 5: eine Darstellung der ersten Ausführungsform in einer Schnittdarstellung,
- Figur 6: eine zweite Ausführungsform in einer dreidimensionalen Darstellung,
- Figur 7: die zweite Ausführungsform während eines Betätigens eines Entriegelungselements in einer dreidimensionalen Darstellung,
- Figuren 8a bis 8c: Ausführungsformen eines erfindungsgemäßen Hebelelements in verschiedenen Positionen.

In der folgenden Beschreibung werden gleiche und gleich wirkende Elemente, sofern nichts anderes angegeben ist, mit denselben Bezugszeichen benannt.

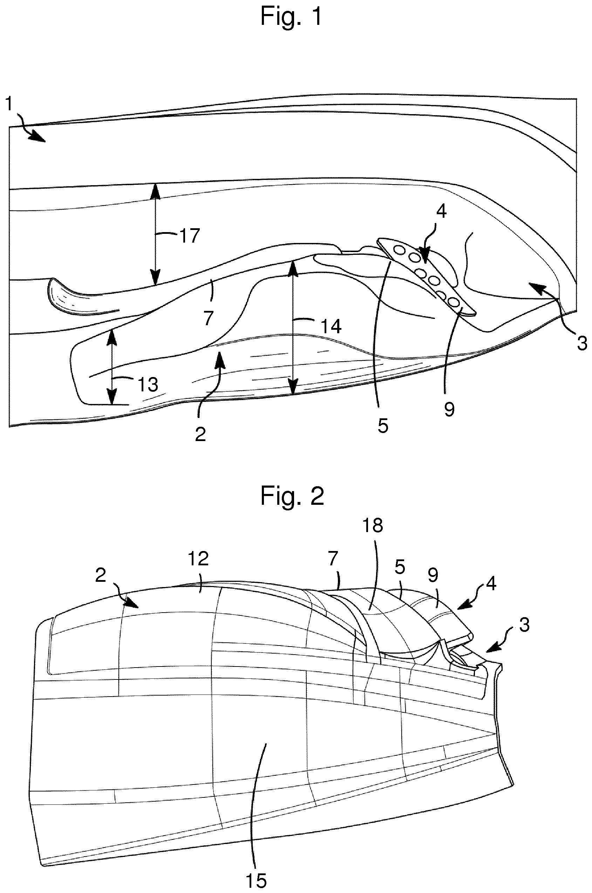

Figur 1 zeigt eine erfindungsgemäße Ausführungsform einer Handauflage in einer Draufsicht, die senkrecht zu einer Hauptebene einer Türverkleidung 1 erfolgt, an der eine erfindungsgemäße Handauflage angeordnet ist. Die Handauflage setzt sich im Wesentlichen aus einem Auflageelement 2, einer Eingriffrinne 3 und einem Entriegelungselement 4 zusammen. Das Auflageelement 2 weist eine Schmal- und eine Längsseite 5, 7 auf, wobei das Auflageelement 2 durch die Eingriffrinne 3 von der Hauptebene der Türverkleidung 1 beabstandet ist. Die Eingriffrinne 3 erstreckt sich von der Schmalseite 5 über die gesamte Längsseite 7 des Auflageelements 2. Des Weiteren besitzt die Eingriffrinne 3 eine Breite 17, die sich über den Verlauf entlang der Längs- 7 bzw. der Schmalseite 5 des Auflageelements 2 verändert.

Ebenso besitzt das Auflageelement 2 Bereiche 13, 14 unterschiedlicher Breite. So ist der Bereich 14, in dem das Entriegelungselement 4 angeordnet ist, deutlich breiter ausgestaltet als der Bereich 13, der am gegenüberliegenden Ende angeordnet ist. Gleichsam verringert sich die Breite 17 der Eingriffrinne 3 an Stellen, an denen sich das Auflageelement 2 verbreitet bzw. verbreitert sich die Eingriffrinne 3 in Bereichen, in denen die Breite des Auflageelements 2 abnimmt. Durch diese gezielt eingebrachten Breitenunterschiede 13, 14 kann eine ergonomische Form erzeugt werden, die sowohl das bequeme Ablegen der Hand auf dem Auflageelement 2 ermöglicht, als auch ein Betätigen des Entriegelungselements 4 bzw. ein Verwenden der Handauflage als Türgriff sicherstellt.

Das Entriegelungselement 4 ist im vorliegenden Beispiel als Zughebel realisiert. Um ein Türschloss zu entriegeln, muss also ein Fahrzeuginsasse die Hand auf das Auflageelement 2 auflegen und die Betätigungsfläche 9 nach oben ziehen. Das Entriegelungselement 4 ist hierbei auf der Schmalseite 5 des Auflageelements 2 angeordnet. Dies hat den Vorteil, dass der Fahrzeuginsasse auch während der Fahrt bzw. bei geöffneter Tür in die Eingriffrinne 3 an der Längsseite 7 eingreifen kann, ohne hierbei versehentlich das Entriegelungselement 4 zu betätigen.

Figur 2 zeigt eine Seitenansicht der erfindungsgemäßen Ausführungsform, in der zur besseren Darstellung die Türverkleidung ausgeblendet ist. Das Auflageelement 2 besitzt eine Wölbung 12, die an eine Form einer menschlichen Hand im entspannten Zustand angepasst ist. Weiterhin ist zwischen Entriegelungselement 4 und der Wölbung 12 eine Senke 18 vorgesehen. Bei aufgelegter Hand auf die Wölbung 12 können die Finger im Wesentlichen in der Senke 18 abgelegt werden. Da das Auflageelement 2 von der Senke 18 ausgehend in Richtung Entriegelungselement 4 ansteigt, wird somit eine vordefinierte Position einer aufgelegten Hand geschaffen. Durch diese Formgebung kann ein versehentliches Betätigen des Entriegelungselements 4 vermieden werden.

Um trotzdem ein möglichst ergonomisches Betätigen des Entriegelungselements 4 zu ermöglichen, verläuft das Entriegelungselement 4 mit seinen größten Flächen in etwa parallel zum angrenzenden Auflageelement 2. Dies hat den Vorteil, dass der Fahrzeuginsasse auch ohne den Blick auf das Entriegelungselement 4 wenden zu müssen, dieses betätigen kann, da er lediglich ausgehend von der Wölbung 12 die Hand nur leicht nach vorne bewegen muss, bis er das Entriegelungselement 4 greifen kann. Dies hat vor allem bei Dunkelheit einen Vorteil, da der Fahrzeuginsasse auch ohne Beleuchtung die Möglichkeit hat, das Entriegelungselement 4 schnell und sicher zu finden. Die größten Flächen des Entriegelungselements 4 entsprechen hierbei den Betätigungsflächen 9. Dies hat den Vorteil, dass der Fahrzeuginsasse das Entriegelungselement 4 mit mehreren Fingern greifen kann und in dem Fall durch Ziehen die Tür entriegelt.

Auf einer dem Betrachter zugewandten Seite der Handauflage weist die Handauflage eine ebene Außenseite 15 auf. Die Außenseite 15 verläuft im Wesentlichen parallel zur Hauptebene der Türverkleidung. Durch diese Außenseite 15 ist es dem Fahrzeuginsassen auf einfache Weise möglich, die Tür nach Entriegeln zu öffnen. Hierzu umgreift der Fahrzeuginsasse mit seinen Fingern das Entriegelungselement 4, so dass die Tür entriegelt werden kann, und kann gleichzeitig mit dem Daumen von außen gegen die Außenseite 15 drücken. Nachdem die Tür entriegelt ist, lässt sich so auf einfache Weise die Tür nach außen bewegen. Während der Öffnungsbewegung kann der Fahrzeuginsasse jedoch nach wie vor mit seinen übrigen Fingern in die Eingriffrinne 3 eingreifen, so dass er bei der Öffnungsbewegung weiterhin Kontrolle über die Tür in beide Richtungen behält.

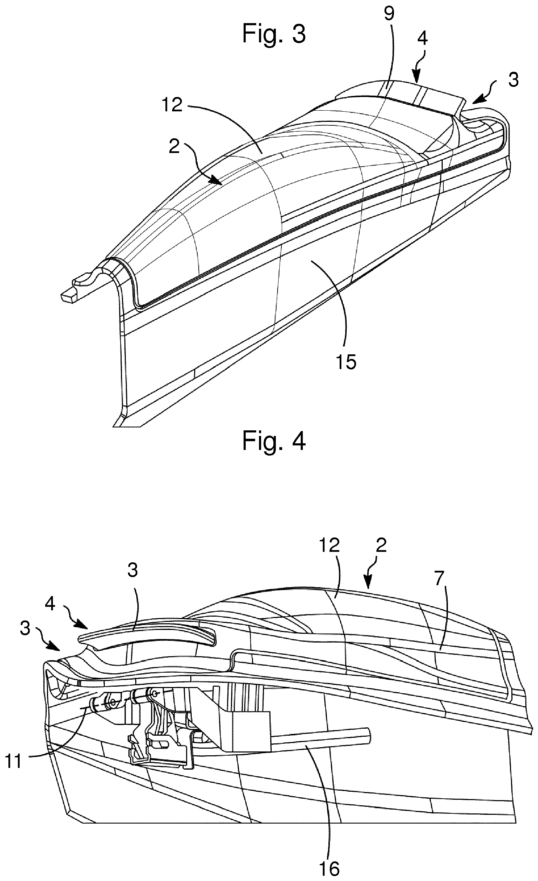

Figur 3 zeigt eine dreidimensionale Darstellung der erfindungsgemäßen Ausführungsform. In dieser Darstellung ist deutlich zu erkennen, dass die Breite des Auflageelements 2 mit zunehmendem Abstand zum Entriegelungselement 4 abnimmt. Dies hat den Vorteil, dass vor allem bei geöffneter Tür an dem dem Entriegelungselement 4 abgewandten Ende des Auflageelements 2 ein Griffbereich ausgebildet ist, der sich besonders einfach umfassen lässt, da das Auflageelement 2 nur eine geringe Breite aufweist. Gleichsam wird jedoch über die gesamte Länge des Auflageelements 2 bzw. der Handauflage zur Außenseite 15 eine ebene Fläche ausgebildet, die dem Fahrzeuginsassen zur Öffnung der Tür dienen kann.

Figur 4 zeigt eine Seitenansicht von der dem Betrachter gegenüberliegenden Seite, so dass die Mechanik des Entriegelungselements 4 sichtbar wird. Das Entriegelungselement 4 ist auf einer Drehachse 11 gelagert. Somit wird durch Drücken des Entriegelungselements 4 die Bewegung in eine Zugbewegung überführt, die zu einem Spannen eines Bowdenzuges 16 führt, der in direkter Verbindung mit dem Entriegelungselement 4 steht. An der Drehachse 11 ist eine nicht gezeigte Feder angeordnet, die das Entriegelungselement 4 entgegen der Betätigungsrichtung vorspannt. Wurde also das Türschloss vom Fahrzeuginsassen durch Drücken des Entriegelungselements 4 entriegelt, begibt sich das Entriegelungselement 4 wieder zurück in seine Ausgangsposition, sobald der Fahrzeuginsasse das Entriegelungselement 4 loslässt. Entsprechend nimmt auch die Spannung auf den Bowdenzug 16 ab. Das Entriegelungselement 4 wird durch eine Öffnung 10, die zwischen Auflageelement 2 und Eingriffrinne 3 angeordnet ist, in den Sichtbereich bzw. Tätigkeitsbereich des Insassen geführt.

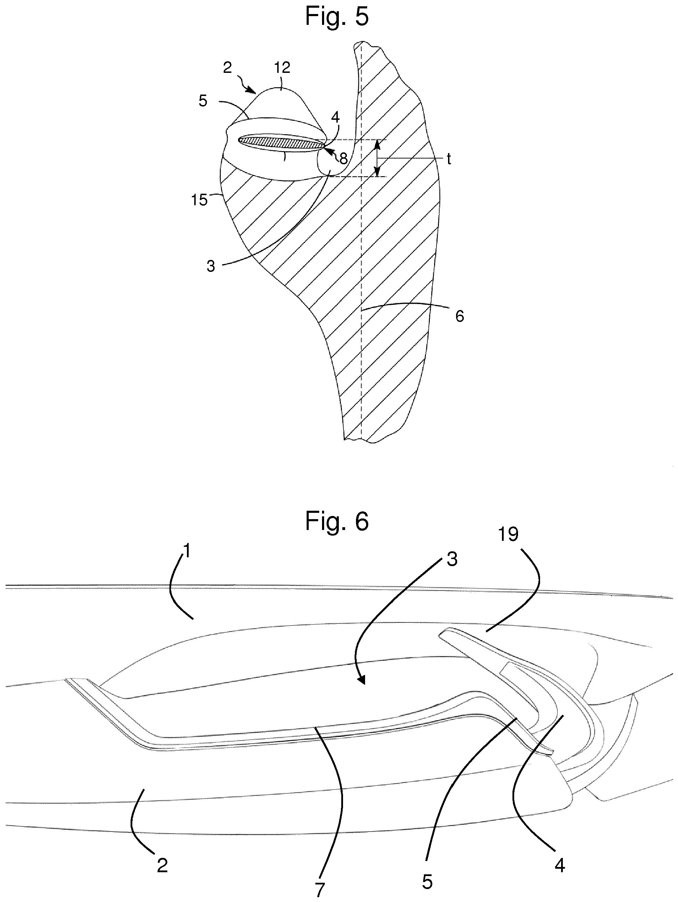

In Figur 5 ist eine Schnittansicht der erfindungsgemäßen Ausführungsform dargestellt. Die Schnittansicht verläuft hierbei senkrecht zur Hauptebene 6 der Türverkleidung. Im Übergang von Eingriffrinne 3 zum Auflageelement 2 wird ein Vorsprung 8 gebildet, in dem das Auflageelement 2 die Eingriffrinne 3 leicht überragt. Das Entriegelungselement 4 wird hier teilweise vom Vorsprung 8 zumindest in der Betätigungsposition überdeckt. Dies ermöglicht insbesondere beim Öffnen der Tür, dass der Fahrzeuginsasse nach dem Betätigen des Entriegelungselements 4 mit der Hand die Eingriffrinne 3 entlang gleiten kann, so dass unabhängig von der Position der Tür zum Fahrzeuginsassen der Fahrzeuginsasse die Handauflage ideal umgreifen kann. Die Eingriffrinne 3 weist daher in Tiefenrichtung t eine Tiefe auf, die es zumindest ermöglicht, dass der Fahrzeuginsasse mit seinen Fingerspitzen den Vorsprung 8 hintergreifen kann.

Figur 6 zeigt eine zweite Ausführungsform einer erfindungsgemäßen Handauflage in einer dreidimensionalen Ansicht. Die Handauflage ist in eine Türverkleidung 1 eines Personenkraftwagens integriert. Das Entriegelungselement 4 ist als Klinke ausgeführt und an der Schmalseite 5 des Auflageelements 2 angeordnet. Das Entriegelungselement 4 ist um eine nicht gezeigte Drehachse verschwenkbar. Weiterhin erstreckt sich das Entriegelungselement 4 in die Eingriffrinne 3 hinein und liegt mit einem Ende an einer dem Auflageelement 2 gegenüberliegenden Begrenzungsfläche 19 der Eingriffrinne 3 an. Durch diese Anordnung kann das Risiko gesenkt werden, dass ein Fahrzeuginsasse unabsichtlich bei einem Eingreifen in die Eingriffrinne 3 an der Längsseite 7 mit den Fingern zwischen das Entriegelungselement 4 und die Begrenzungsfläche 19 gelangt und beispielsweise das Entriegelungselement 4 versehentlich betätigt. Gleichzeitig kann der Fahrzeuginsasse jedoch das Entriegelungselement 4 auf einfache Weise bewusst betätigen, indem er zur Schmalseite 5 des Auflageelments 2 greift und das Entriegelungselement 4 an die Längsseite 7 heranführt.

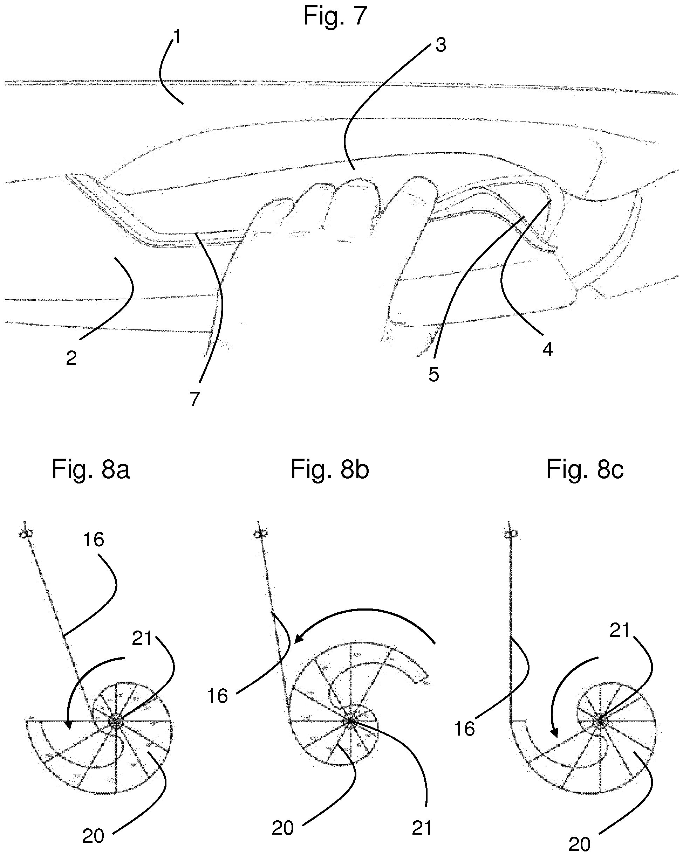

Figur 7 zeigt die Handauflage gemäß der Ausführungsform nach Figur 6 in einem Moment, in dem das Entriegelungselement 4 durch einen Fahrzeuginsassen betätigt wird. Der Fahrzeuginsasse zieht hierzu das Entriegelungselement 4 an sich heran, bis zumindest der Teil des Entriegelungselements 4, der vom Fahrzeuginsassen umfasst wird, parallel zur Längsseite 7 des Auflageelements 2 angeordnet ist. Auf diese Weise kann der Fahrzeuginsasse sowohl das Türschloss entriegeln und gleichzeitig das Auflageelement 2 umgreifen. Der Fahrzeuginsasse kann also sofort die Tür kontrolliert öffnen, ohne dass der Fahrzeuginsasse die Hand von der Handauflage lösen muss.

Die Figuren 8a bis 8c zeigen den schematischen Bewegungsverlauf einer Ausführungsform eines erfindungsgemäßen Hebelelements 20, während der Betätigung eines nicht dargestellten Entriegelungselements. Das Hebelelement 20 besitzt eine Schneckenform und ist über eine Hebelachse 21 rotierbar angeordnet. Weiterhin ist an dem Hebelelement 20 ein biegeschlaffes Verbindungselement 16 angeordnet, das im vorliegendem Ausführungsbeispiel einem Seilzug entspricht. Der in den Figuren dargestellte gekrümmte Pfeil zeigt des Weiteren die Drehrichtung des Hebelelements 20 an. Durch die Schneckenform des Hebelelements 20 erhöht sich mit zunehmender Rotationsbewegung des Hebelelements 20 der Abstand zwischen dem Punkt, an dem der gespannte Seilzug 16 an das Hebelelement 20 angrenzt und der Hebelachse 21, was zu einer Drehmomenterhöhung führt. Mit zunehmendem Rotationsweg ist somit weniger Kraft erforderlich den Seilzug 16 weiter aufzuwickeln bzw. zu spannen, um eine Türschlossentriegelung einzuleiten. Aufgrund dieser Formgebung ist die Kraft, die notwendig ist den Seilzug 16 zu bewegen zu Beginn der Bewegung maximal und nimmt dann stetig ab.

Die mit Bezug auf die Figuren gemachten Erläuterungen sind rein illustrativ und nicht beschränkend zu verstehen.

### BEZUGSZEICHENLISTE

- 1: Türverkleidung
- 2: Auflageelement
- 3: Eingriffrinne
- 4: Entriegelungselement
- 5: Schmalseite
- 6: Hauptebene
- 7: Längsseite
- 8: Vorsprung
- 9: Betätigungsfläche
- 10: Öffnung
- 11: Drehachse
- 12: Wölbung
- 13: Breitenabschnitt 1
- 14: Breitenabschnitt 2
- 15: Außenseite
- 16: biegeschlaffes Verbindungselement
- 17: Breite der Eingriffrinne
- 18: Senke
- 19: Begrenzungsfläche
- 20: Hebelelement
- 21: Hebelachse
- t: Tiefenrichtung

## Patentansprüche

1. Handauflage für eine Türverkleidung (1) eines Fahrzeuges, insbesondere für eine Kraftfahrzeugtür, umfassend:
- ein Auflageelement (2),
- eine Eingriffrinne (3),
- ein Entriegelungselement (4) zum Entriegeln eines Türschlosses,
wobei das Auflageelement (2) eine Schmalseite (5), die in einem Winkel zwischen 40 und 100 Grad zu einer Hauptebene (6) der Türverkleidung (1) angeordnet ist, sowie eine Längsseite (7), die in einem Winkel zwischen 0 und 30 Grad zu der Hauptebene (6) angeordnet ist, aufweist, wobei die Eingriffrinne (3) an die Längs- und/oder Schmalseite (5; 7) des Auflageelements (2) angrenzt, wobei das Entriegelungselement (4) an dem Auflageelement (2) angrenzend angeordnet ist, **dadurch gekennzeichnet, dass** das Entriegelungselement (4) sich zumindest teilweise in die Eingriffrinne (3) hinein erstreckt.

2. Handauflage nach dem vorhergehenden Anspruch, wobei sich das Auflageelement (2) teilweise in die Eingriffrinne (3) hinein erstreckt, so dass ein Vorsprung (8) ausgebildet wird.

3. Handauflage nach dem vorhergehenden Anspruch, wobei das Entriegelungselement (4) in zumindest einer Position durch den Vorsprung (8) verdeckt wird.

4. Handauflage nach Anspruch 2 oder 3, wobei das Entriegelungselement (4) eine Betätigungsfläche (9) aufweist, die in zumindest einer Position parallel zu einer Seite des Vorsprungs (8) angeordnet ist, die der Eingriffrinne (3) zugewandt ist.

5. Handauflage nach einem der vorhergehenden Ansprüche, wobei die Eingriffrinne (3) sowohl an die Längsseite (7) als auch an die Schmalseite (5) des Auflageelements (2) angrenzt.

6. Handauflage nach einem der vorhergehenden Ansprüche, wobei das Entriegelungselement (4) an der Schmalseite (5) des Auflageelements (2) angeordnet ist.

7. Handauflage nach einem der vorhergehenden Ansprüche, wobei die Eingriffrinne (3) eine Tiefenrichtung (t) aufweist, die parallel zur Hauptebene (6) verläuft und zumindest abschnittsweise eine Tiefe der Eingriffrinne (3) in Tiefenrichtung (t) entlang einer Längserstreckung variiert.

8. Handauflage nach einem der vorhergehenden Ansprüche, wobei das Auflageelement (2) eine Öffnung (10) aufweist, durch die das Entriegelungselement (4) zumindest anteilig geführt ist.

9. Handauflage nach einem der vorhergehenden Ansprüche, wobei das Entriegelungselement (4) entlang einer Bewegungsachse beweglich ist, die parallel zu einer Hauptbewegungsrichtung des Fahrzeuges verläuft.

10. Handauflage nach einem der Ansprüche 1 bis 8, wobei das Entriegelungselement (4) um eine Drehachse (11) verschwenkbar ist.

11. Handauflage nach einem der vorhergehenden Ansprüche, wobei das Auflageelement (2) eine Wölbung (12) aufweist.

12. Handauflage nach einem der vorhergehenden Ansprüche, wobei das Auflageelement (2) Abschnitte (13, 14) unterschiedlicher Breite aufweist, wobei die Breite vorzugsweise senkrecht zu der Hauptebene (6) der Türverkleidung (1) verläuft.

13. Handauflage nach einem der vorhergehenden Ansprüche, wobei das Entriegelungselement (4) in einer ersten Position an einer dem Ablageelement (2) gegenüberliegenden Begrenzungsfläche (19) der Eingriffrinne (3) zumindest teilweise anliegt und in einer zweiten Position zumindest teilweise parallel zur Schmal- oder Längsseite des Ablageelements (2) angeordnet ist.

14. Handauflage nach einem der vorhergehenden Ansprüche, wobei das Entriegelungselement (4) mit einem Hebelelement (20) in Verbindung steht, an dem zu einer Türschlossentriegelung ein biegeschlaffes Verbindungselement (16), insbesondere ein Bowdenzug, angeordnet ist.

15. Handauflage nach dem vorhergehenden Anspruch, wobei das Hebelelement (20) um eine Hebelachse (22) rotierbar und das biegeschlaffe Verbindungselement (16) auf dem Hebelelement (20) aufwickelbar ist.

16. Handauflage nach einem der Ansprüche 14 oder 15, wobei das Hebelelement (20) "L"-, "C"-, oder schneckenförmig ist.

## Claims

1. Hand support for a door lining (1) of a vehicle, in particular for a motor vehicle door, comprising:
- a support element (2),
- an engagement groove (3),
- an unlocking element (4) for unlocking a door lock,
wherein the support element (2) has a narrow side (5) which is arranged at an angle of between 40 and 100 degrees to a main plane (6) of the door lining (1), and a longitudinal side (7) which is arranged at an angle of between 0 and 30 degrees to the main plane (6), wherein the engagement groove (3) adjoins the longitudinal and/or narrow side (5; 7) of the support element (2), wherein the unlocking element (4) is arranged so as to adjoin the support element (2), **characterized in that** the unlocking element (4) extends at least partially into the engagement groove (3).

2. Hand support according to the preceding claim, wherein the support element (2) extends partially into the engagement groove (3) such that a projection (8) is formed.

3. Hand support according to the preceding claim, wherein the unlocking element (4) is concealed in at least one position by the projection (8).

4. Hand support according to Claim 2 or 3, wherein the unlocking element (4) has an actuating surface (9) which, in at least one position, is arranged parallel to a side of the projection (8) that faces the engagement groove (3).

5. Hand support according to one of the preceding claims, wherein the engagement groove (3) adjoins both the longitudinal side (7) and the narrow side (5) of the support element (2).

6. Hand support according to one of the preceding claims, wherein the unlocking element (4) is arranged on the narrow side (5) of the support element (2).

7. Hand support according to one of the preceding claims, wherein the engagement groove (3) has a depth direction (t) which extends parallel to the main plane (6) and, at least in certain portions, a depth of the engagement groove (3) in the depth direction (t) varies along a longitudinal extent.

8. Hand support according to one of the preceding claims, wherein the support element (2) has an opening (10) through which the unlocking element (4) is at least partially guided.

9. Hand support according to one of the preceding claims, wherein the unlocking element (4) is movable along an axis of movement which extends parallel to a main direction of movement of the vehicle.

10. Hand support according to one of Claims 1 to 8, wherein the unlocking element (4) is pivotable about an axis of rotation (11).

11. Hand support according to one of the preceding claims, wherein the support element (2) has a convexity (12) .

12. Hand support according to one of the preceding claims, wherein the support element (2) has portions (13, 14) of different widths, wherein the width preferably extends perpendicularly to the main plane (6) of the door lining (1).

13. Hand support according to one of the preceding claims, wherein, in a first position, the unlocking element (4) at least partially bears against a boundary surface (19) of the engagement groove (3) that is opposite to the rest element (2) and, in a second position, is arranged at least partially parallel to the narrow or longitudinal side of the rest element (2).

14. Hand support according to one of the preceding claims, wherein the unlocking element (4) is connected to a lever element (20) on which a pliable connecting element (16), in particular a Bowden cable, is arranged for unlocking the door lock.

15. Hand support according to the preceding claim, wherein the lever element (20) is rotatable about a lever axis (22) and the pliable connecting element (16) can be wound on the lever element (20) .

16. Hand support according to either of Claims 14 and 15, wherein the lever element (20) has an "L", "C" or helical shape.

## Revendications

1. Repose-main pour un habillage de portière (1) d'un véhicule, en particulier pour une portière de véhicule automobile, comprenant:
- un élément d'appui (2),
- une fossette de poignée (3),
- un élément de déverrouillage (4) pour le déverrouillage d'une serrure de portière,
dans lequel l'élément d'appui (2) présente un côté étroit (5), qui est disposé avec un angle compris entre 40 et 100 degrés par rapport à un plan principal (6) de l'habillage de portière (1), ainsi qu'un côté longitudinal (7), qui est disposé avec un angle compris entre 0 et 30 degrés par rapport au plan principal (6), dans lequel la fossette de poignée (3) est jointive au côté longitudinal et/ou au côté étroit (5; 7) de l'élément d'appui (2), dans lequel l'élément de déverrouillage (4) est disposé de façon jointive à l'élément d'appui (2), **caractérisé en ce que** l'élément de déverrouillage (4) s'étend au moins en partie à l'intérieur de la fossette de poignée (3).

2. Repose-main selon la revendication précédente, dans lequel l'élément d'appui (2) s'étend en partie à l'intérieur de la fossette de poignée (3), de telle manière qu'une saillie (8) soit formée.

3. Repose-main selon la revendication précédente, dans lequel l'élément de déverrouillage (4) est masqué dans au moins une position par la saillie (8).

4. Repose-main selon la revendication 2 ou 3, dans lequel l'élément de déverrouillage (4) présente une face d'actionnement (9), qui est disposée dans au moins une position parallèlement à un côté de la saillie (8), qui est tourné vers la fossette de poignée (3).

5. Repose-main selon l'une quelconque des revendications précédentes, dans lequel la fossette de poignée (3) est jointive aussi bien au côté longitudinal (7) qu'au côté étroit (5) de l'élément d'appui (2).

6. Repose-main selon l'une quelconque des revendications précédentes, dans lequel l'élément de déverrouillage (4) est disposé sur le côté étroit (5) de l'élément d'appui (2).

7. Repose-main selon l'une quelconque des revendications précédentes, dans lequel la fossette de poignée (3) présente une direction de profondeur (t), qui est parallèle au plan principal (6) et une profondeur de la fossette de poignée (3) dans la direction de la profondeur (t) varie au moins localement le long d'une extension longitudinale.

8. Repose-main selon l'une quelconque des revendications précédentes, dans lequel l'élément d'appui (2) présente une ouverture (10), à travers laquelle l'élément de déverrouillage (4) est mené au moins en partie.

9. Repose-main selon l'une quelconque des revendications précédentes, dans lequel l'élément de déverrouillage (4) est mobile le long d'un axe de mouvement, qui est parallèle à une direction de mouvement principale du véhicule.

10. Repose-main selon l'une quelconque des revendications 1 à 8, dans lequel l'élément de déverrouillage (4) peut pivoter autour d'un axe de rotation (11).

11. Repose-main selon l'une quelconque des revendications précédentes, dans lequel l'élément d'appui (2) présente un galbage (12).

12. Repose-main selon l'une quelconque des revendications précédentes, dans lequel l'élément d'appui (2) présente des parties (13, 14) de largeur différente, dans lequel la largeur est de préférence perpendiculaire au plan principal (6) de l'habillage de portière (1).

13. Repose-main selon l'une quelconque des revendications précédentes, dans lequel l'élément de déverrouillage (4) dans une première position s'applique au moins en partie sur une face de limitation (19) de la fossette de poignée (3) faisant face à l'élément d'appui (2) et dans une deuxième position est disposé au moins en partie parallèlement au côté étroit ou au côté longitudinal de l'élément d'appui (2).

14. Repose-main selon l'une quelconque des revendications précédentes, dans lequel l'élément de déverrouillage (4) est en liaison avec un élément de levier (20), sur lequel un élément de liaison flexible (16), en particulier un câble Bowden, est disposé pour un déverrouillage de la serrure de portière.

15. Repose-main selon la revendication précédente, dans lequel l'élément de levier (20) peut tourner autour d'un axe de levier (22) et l'élément de liaison flexible (16) peut être enroulé sur l'élément de levier (20) .

16. Repose-main selon l'une des revendications 14 ou 15, dans lequel l'élément de levier (20) est en forme de "L", de "C" ou de vis sans fin.
